# EUROPEAN PATENT APPLICATION

(11) **EP 2 138 042 A1**
(43) Date of publication of application: **30.12.2009**
(21) Application number: 08159083.8
(22) Date of filing: 26.06.2008
(51) Int. Cl.: A01N 57/20, A01N 25/24, A01N 43/54

(54) **A method for enhancing the rainfastness of glyphosate**

(71) Applicant: BASF SE, 67056 Ludwigshafen (DE)
(72) Inventor: Begliomini, Edson, 04538-132 Sao Paulo (BR); Yotsumoto, Tadashi, 04538-132 Sao Paulo (BR)

(57) **Abstract**

A method to enhance the rainfastness of glyphosate by applying a composition comprising
a) glyphosate or at least one agriculturally acceptable salt, derivative or mixtures thereof, and
b) saflufenacil or at least one agriculturally acceptable derivative or mixtures thereof, to unwanted vegetation, crops, crop seed or other crop propagating organ.

## Description

The present invention relates to a method to enhance the rainfastness of glyphosate or its salts or mixtures of its salts.

Glyphosate and its salts are widely used as herbicides in agricultural, industrial and recreational areas. They are typically applied as formulated products by spraying on the foliage of the vegetation to be protected or controlled.

However, the effectiveness of glyphosate is often not satisfactory and several applications and/or high dosage rates are often required. Moreover, the reliability of such combinations depends strongly on the weathering conditions.
Glyphosate and especially its salts have a relatively high water solubility. It follows that during the uptake period into the leaves after application glyphosate tends to being washed off the foliage by rain, overhead watering or irrigation. As glyphosate has practically no herbicidal activity in the soil, its efficacy is seriously reduced by such washing. So a common problem within the application of glyphosate is that its efficacy will be reduced if rain falls shortly after application.

Therefore methods of overcoming this problem shall enhance the "rainfastness" of glyphosate.

Methods to enhance the rainfastness of glyphosate by using specific adjuvants or formulation auxiliaries have already been disclosed (see for example WO 95/16351, WO 97/00010).

However the rainfastness of known glyphosate original formulations is not satisfying because they need after application at least six hours without rain to achieve the best weed control potential.

Surprisingly it has now been found that the application of a composition comprising glyphosate and saflufenacil effectively enhances the rainfastness of glyphosate.

The present invention therefore relates to a method to enhance the rainfastness of glyphosate by applying a composition comprising
a) glyphosate or at least one agriculturally acceptable salt, derivative or mixtures thereof, and
b) saflufenacil or at least one agriculturally acceptable derivative or mixtures thereof, to unwanted vegetation, crops, crop seed or other crop propagating organ.

The present invention further related to a herbicidal composition comprising glyphosate or at least one agriculturally acceptable salt, derivative or mixtures thereof, and saflufenacil or at least one agriculturally acceptable salt or mixtures thereof, in a ratio of 1:50 to 50:1.

Glyphosate [common name of N-(phosphonomethyl)glycine] is a well known non-selective systemic herbicide, which has been described e.g. in US 3,799,758 and US 4,4505,531. Glyphosate is commercially available e.g. from Monsanto under the tradenames Roundup^{™} and Touchdown^{™}. Glyphosate is also available and marketed in the form of its agriculturally acceptable salts such as glyphosate-diammonium [69254-40-6], glyphosate-isopropylammonium [38641-94-0], glyphosate-monoammonium [40465-66-5], glyphosate-potassium [70901-20-1], glyphosate-sesquisodium [70393-85-0], glyphosate-trimesium [81591-81-3]. Preferably, glyphosate is used in the form of its monoammonium, diammonium, isopropylammonium or trimesium salt.

Saflufenacil [common name of 2-chloro-5-[3,6-dihydro-3-methyl-2,6-dioxo-4-(trifluoromethyl)-1 (2H)-pyrimidinyl]-4-fluoro-N-[[methyl(1-methylethyl)amino]sulfonyl]benzamide] having the formula 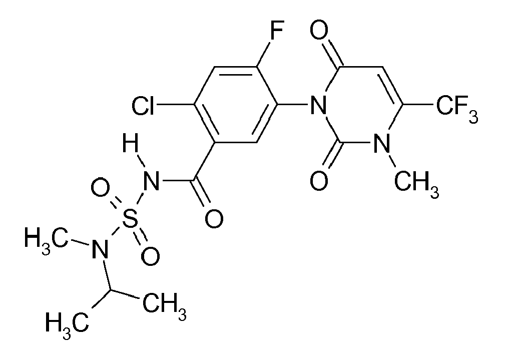 is known from e.g. WO 01/83459 and also from The Compendium of Pesticide Common Names http://www.alanwood.net/pesticides/.

The compositions of the invention may also comprise, as a component c), one or more safeners C. Safeners, also termed as herbicide safeners, are organic compounds which in some cases lead to better crop plant compatibility when applied jointly with specifically acting herbicides. Some safeners are themselves herbicidally active. In these cases, the safeners act as antidote or antagonist in the crop plants and thus reduce or even prevent damage to the crop plants. However, in the compositions of the present invention, safeners are generally not required. Therefore, a preferred embodiment of the invention relates to compositions which contain no safener C or virtually no safener (i.e. less than 1 % by weight, based on the total amount of glyphosate and herbicide B).

Suitable safeners C, which can be used in the compositions according to the present invention are known in the art, e.g. from The Compendium of Pesticide Common Names (http://www.alanwood.net/pesticides/); Farm Chemicals Handbook 2000 Vol. 86, Meister Publishing Company, 2000; B. Hock, C. Fedtke, R. R. Schmidt, Herbizide, Georg Thieme Verlag, Stuttgart 1995; W. H. Ahrens, Herbicide Handbook, 7th Edition, Weed Science Society of America, 1994; and K. K. Hatzios, Herbicide Handbook, Supplement to 7th Edition, Weed Science Society of America, 1998.

Safeners C include benoxacor, cloquintocet, cyometrinil, cyprosulfamide, dichlormid, dicyclonon, dietholate, fenchlorazole, fenclorim, flurazole, fluxofenim, furilazole, isoxadifen, mefenpyr, mephenate, naphthalic anhydride, 2,2,5-trimethyl-3-(dichloracetyl)-1,3-oxazolidine, 4-(dichloroacetyl)-1-oxa-4-azaspiro[4.5]decane and oxabetrinil, as well as thereof agriculturally acceptable salts and, provided they have a carboxyl group, their agriculturally acceptable derivatives. 2,2,5-Trimethyl-3-(dichloroacetyl)-1,3-oxazolidine [CAS No. 52836-31-4] is also known under the name R-29148.4-(Dichloroacetyl)-1-oxa-4- azaspiro[4.5]decane [CAS No. 71526-07-03] is also known under the names AD-67 and MON 4660.

As safener C, the compositions according to the invention particularly preferably comprise at least one of the compounds selected from the group of benoxacor, cloquintocet, cyprosulfamide, dichlormid, fenchlorazole, fenclorim, fluxofenim, furilazole, isoxadifen, mefenpyr, naphthalic anhydride, 2,2,5-trimethyl-3-(dichloroacetyl)-1,3-oxazolidine, and 4-(dichloroacetyl)-1-oxa-4-azaspiro[4.5]decane and oxabetrinil; and the agriculturally acceptable salt thereof and, in the case of compounds having a COOH group, an agriculturally acceptable derivative as defined below.

A preferred embodiment of the invention relates to compositions which contain no safener C or virtually no safener C (i.e. less than 1 % by weight, based on the total amount of glyphosate and the at least one herbicide B) is applied.

In other words in a preferred embodiment the compositions of the present invention comprise as only active ingredients glyphosate and saflufenacil. "Active ingredient" in this context means pesticides and safeners.

The compositions of the invention may also comprise, as a component d), one or more herbicides D which are different from glyphosate and saflufenacil. Such further herbicides D may broaden the activity spectrum of the inventive compositions. However, further herbicides D are generally not required. Therefore, a preferred embodiment of the invention relates to compositions which contain no further herbicide D or virtually no further herbicide D (i.e. less than 1 % by weight, based on the total amount of glyphosate and saflufenacil).

In other words in a preferred embodiment the compositions of the present invention comprise as only herbicidal active components, preferably as only pesticidal active components glyphosate and saflufenacil.

In particular, the compositions of the present invention consist of glyphosate and saflufenacil, i.e. they neither contain a safener C nor a further herbicide D.

If the compounds mentioned as glyphosate, saflufenacil, herbicides D and safeners C are capable of forming geometrical isomers, for example E/Z isomers, it is possible to use both the pure isomers and mixtures thereof in the compositions according to the invention.

If the compounds mentioned as glyphosate, saflufenacil, herbicides D and safeners C have one or more centers of chirality and, as a consequence, are present as enantiomers or diastereomers, it is possible to use both the pure enantiomers and diastereomers and their mixtures in the compositions according to the invention.

If the compounds mentioned as glyphosate, saflufenacil, herbicides D and safeners C (see below) have functional groups, which can be ionized, they can also be used in the form of their agriculturally acceptable salts or mixtures thereof.

In general, the salts of those cations are suitable whose cations have no adverse effect on the action of the active compounds ("agricultural acceptable"). Preferred cations are the ions of the alkali metals, preferably of lithium, sodium and potassium, of the alkaline earth metals, preferably of calcium and magnesium, and of the transition metals, preferably of manganese, copper, zinc and iron, furthermore ammonium and substituted ammonium (hereinafter also termed as organoammonium) in which one to four hydrogen atoms are replaced by C₁-C₄-alkyl, hydroxy-C₁-C₄-alkyl, C₁-C₄-alkoxy-C₁-C₄-alkyl, hydroxy-C₁-C₄-alkoxy-C₁-C₄-alkyl, phenyl or benzyl, preferably ammonium, methylammonium, isopropylammonium, dimethylammonium, diisopropylammonium, trimethylammonium, tetramethylammonium, tetraethylammonium, tetrabutylammonium, 2-hydroxyethylammonium, 2-(2-hydroxyethoxy)eth-1-ylammonium, di(2-hydroxyeth-1-yl)ammonium, benzyltrimethylammonium, benzyltriethylammonium, furthermore phosphonium ions, sulfonium ions, preferably tri(C₁-C₄-alkyl)sulfonium such as trimethylsulfonium, and sulfoxonium ions, preferably tri(C₁-C₄-alkyl)sulfoxonium.

Anions of useful acid addition salts are primarily chloride, bromide, fluoride, iodide, hydrogen sulfate, methyl sulfate, sulfate, dihydrogen phosphate, hydrogen phosphate, nitrate, dicarbonate, carbonate, hexafluorosilicate, hexafluorophosphate, benzoate and the anions of C₁-C₄-alkanoic acids, preferably formate, acetate, propionate and butyrate.

In the compositions according to the invention, the compounds that carry a carboxyl group can also be employed in the form of agriculturally acceptable derivatives, for example as amides such as mono- or di-C₁-C₆-alkylamides or arylamides, as esters, for example as allyl esters, propargyl esters, C₁-C₁₀-alkyl esters or alkoxyalkyl esters, and also as thioesters, for example as C₁-C₁₀-alkyl thioesters. Preferred mono- and di-C₁-C₆-alkylamides are the methyl- and the dimethylamides. Preferred arylamides are, for example, the anilidines and the 2-chloroanilides. Preferred alkyl esters are, for example, the methyl, ethyl, propyl, isopropyl, butyl, isobutyl, pentyl, mexyl (1-methylhexyl) or isooctyl (2-ethylhexyl) esters. Preferred C₁-C₄-alkoxy-C₁-C₄-alkyl esters are the straight-chain or branched C₁-C₄-alkoxyethyl esters, for example the methoxyethyl, ethoxyethyl or butoxyethyl esters. An example of the straight-chain or branched C₁-C₁₀-alkyl thioesters is the ethyl thioester.
Preferred derivatives are the amides and the esters, especially preferred are the esters.

In the compositions of the present invention the relative weight ratio of glyphosate to saflufenacil is preferably in the range from 1:50 to 50:1, in particular in the range from 1:50 to 1:1, more preferably from 1:50 to 1:20; particularly preferred from 1:45:1 to 1:35.

Accordingly, in the methods and uses of the invention, glyphosate and saflufenacil are applied within these weight ratios.

The methods and the compositions of the present invention can be applied in conventional manner by using techniques as skilled person is familiar with. Suitable techniques include spraying, atomizing, dusting, spreading or watering. The type of application depends on the intended purpose in a well known manner; in any case, they should ensure the finest possible distribution of the active ingredients according to the invention.

The method and the compositions are applied to locus mainly by spraying, in particular foliar spraying of an aqueous dilution of the active ingredients of the composition. Application can be carried out by customary spraying techniques using, for example, water as carrier and spray liquor rates of from about 80 to400 l/ha, preferably for terrestrial application, or 10 to 50 l/ha, preferably for aerial application. Application of the herbicidal compositions by the low-volume and the ultra-low-volume method is possible, as is their application in the form of microgranules (not applied granular mixture application without liquid carrier).

If the active ingredients are less well tolerated by certain crop plants, application techniques may be used in which the herbicidal compositions are sprayed, with the aid of the spray apparatus, in such a way that they come into as little contact, if any, with the leaves of the sensitive crop plants while reaching the leaves of undesirable plants which grow underneath, or the bare soil (post-directed, lay-by).

The method according to the invention is applied post-emergence of the undesirable plants, i.e. during and/or after emergence of the undesirable plants.

The methods according to the present invention can be applied before, during or after emergence of the crop plants.

The components of the compositions according to the present invention can be applied jointly or separately, simultaneously or successively.

Preferably the components of the compositions according to the present invention are applied jointly.

Also preferably the components of the compositions according to the present invention are applied separately.

Also preferably the components of the compositions according to the present invention are applied simultaneously.

Also preferably the components of the compositions according to the present invention are applied successively.

Furthermore the method and the compositions according to the present invention can be applied before, during or after emergence of the crop plants.

It is a particular benefit of the compositions according to the invention that they have a very good post-emergence herbicide activity, i.e. they show a good herbicidal activity against emerged undesirable plants.
Thus, in a preferred embodiment of invention, the compositions are applied post-emergence of the undesirable plants, i.e. during and/or after, the emergence of the undesirable plants. It is particularly advantageous to apply the mixtures according to the invention post emergent when the undesirable plant starts with leaf development up to flowering.

In the case of a post-emergence treatment of the plants, the method and the compositions according to the invention are preferably applied by foliar application.

The required application rate of the composition of the pure active compounds, i.e. of glyphosate, saflufenacil and optionally herbicide D depends on the density of the undesired vegetation, on the development stage of the plants, on the climatic conditions of the location where the composition is used and on the application method. In general, the application rate of the composition (total amount of glyphosate, saflufenacil and optional further actives is from 15 to 1580 g/ha, preferably from 380 to 1220 g/ha, more preferably from 750 to 1150 g/ha, and particularly preferably from 745 to 1130 g/ha of active ingredient (a.i.).
In a preferred embodiment of the invention, the composition of the pure active compounds, i.e. of glyphosate, saflufenacil and optionally component D are applied in a rate which provides long-term weed control when applied post-directed.

The rate of application of glyphosate is usually from 360 g/ha to 1440 g/ha and preferably in the range from 360 g/ha to 1080 g/ha or fro720 g/ha to 1080 g/ha of active substance (a.i.).

The application rates of saflufenacil is generally in the range from 10 g/ha to 200 g/ha and preferably in the range from 20 g/ha to 140 g/ha or from 20 g/ha to 100 g/ha of active substance.

Preferably the rate of application of saflufenacil is from 5 g/ha to 140 g/ha and more preferably in the range from 20 g/ha to 100 g/ha or from 25 g/ha to 70 g/ha of active substance (a.i.).

The application rates of the optional herbicide D (total amount of herbicide D) are generally in the range from 10 g/ha to 2500 g/ha and preferably in the range from 40 g/ha to 1500 g/ha or from 60 g/ha to 1000 g/ha of active substance.

The required application rates of the safener C, if applied, are generally in the range from 1 g/ha to 5000 g/ha and preferably in the range from 2 g/ha to 5000 g/ha or from 5 g/ha to 5000 g/ha of active substance.
Preferably no safener or virtually no safener is applied and thus the application rates are below 5 g/ha, in particular below 2 g/ha or below 1 g/ha.

The method and the compositions according to the present invention are applied preferably prior to the onset of rain,
preferably up to six hours before rain,
more preferably up to four hour before rain,
particularly preferably up to two hours before rain,
more particularly preferably up to one hour before rain,
most preferably up to 30 min before rain.

The method and the compositions of the present invention are suitable for controlling a large number of harmful plants, including monocotyledonous weeds, in particular annual weeds such as gramineous weeds (grasses) including Echinochloa species such as barnyardgrass (Echinochloa crusgalli var. crus-galli), Digitaria species such as crabgrass (Digitaria sanguinalis), Setaria species such as green foxtail (Setaria viridis) and giant foxtail (Setaria faberii), Sorghum species such as johnsongrass (Sorghum halepense Pers.), Avena species such as wild oats (Avena fatua), Cenchrus species such as Cenchrus echinatus, Bromus species, Lolium species, Phalaris species, Eri-ochloa species, Panicum species, Brachiaria species, annual bluegrass (Poa annua), blackgrass (Alopecurus myosuroides), Aegilops cylindrica, Agropyron repens, Apera spica-venti, Eleusine indica, Cynodon dactylon and the like.

The method and the compositions of the present invention are also suitable for controlling a large number of dicotyledonous weeds, in particular broad leaf weeds including Polygonum species such as wild buckwheat (Polygonum convolvolus), Amaranthus species such as pigweed (Amaranthus retroflexus), Chenopodium species such as common lambsquarters (Chenopodium album L.), Sida species such as prickly sida (Sida spinosa L.), Ambrosia species such as common ragweed (Ambrosia artemisiifolia), Acanthospermum species, Anthemis species, Atriplex species, Cirsium species, Convolvulus species, Conyza species, Cassia species, Commelina species, Datura species, Euphorbia species, Geranium species, Galinsoga species, morningglory (Ipomoea species), Lamium species, Malva species, Matricaria species, Sysimbrium species, Solanum species, Xanthium species, Veronica species, Viola species, common chickweed (Stellaria media), velvetleaf (Abutilon theophrasti), Hemp sesbania (Sesbania exaltata Cory), Anoda cristata, Bidens pilosa, Brassica kaber, Capsella bursa-pastoris, Centaurea cyanus, Galeopsis tetrahit, Galium aparine, Helianthus annuus, Desmodium tortuosum, Kochia scoparia, Mercurialis annua, Myosotis arvensis, Papaver rhoeas, Raphanus raphanistrum, Salsola kali, Sinapis arvensis, Sonchus arvensis, Thlaspi arvense, Tagetes minuta, Richardia brasiliensis, and the like.

The method and the compositions of the present invention are also suitable for controlling a large number of annual and perennial sedge weeds including cyperus species such as purple nutsedge (Cyperus rotundus L.), yellow nutsedge (Cyperus esculentus L.), hime-kugu (Cyperus brevifolius H.), sedge weed (Cyperus microiria Steud), rice flatsedge (Cyperus iria L.), and the like.

Therefore, the present invention also relates to a method for combating dicotyledonous weeds, in particular broad leaf weeds comprising applying
a) glyphosate or at least one agriculturally acceptable salt, derivative or mixtures thereof, and
b) saflufenacil or at least one agriculturally acceptable salt or mixtures thereof,
   to a locus where crops will be planted before planting or emergence of the crop, preferably during and/or after emergence of the undesirable plants.

The method and the compositions according to the present invention are suitable for combating/controlling common harmful plants in useful plants (i.e. in crops). The method and the compositions of the present invention are generally suitable for combating/controlling undesired vegetation in
- Grain crops, including e.g.
   - cereals such as wheat (Triticum aestivum) and wheat like crops such as durum (T. durum), einkorn (T. monococcum), emmer (T. dicoccon) and spelt (T. spelta), rye (Secale cereale), triticale (Tritiosecale), barley (Hordeum vulgare);
   - maize (corn; Zea mays);
   - sorghum (e.g. Sorghum bicolour);
   - rice (Oryza spp. such as Oryza sativa and Oryza glaberrima); and
   - sugar cane;
- legumes (Fabaceae), including e.g. soybeans (Glycine max.), peanuts (Arachis hypogaea and pulse crops such as peas including Pisum sativum, pigeon pea and cowpea, beans including broad beans (Vicia faba), Vigna spp., and Phaseolus spp. and lentils (lens culinaris var.);
- brassicaceae, including e.g. canola (Brassica napus), oilseed rape (Brassica napus), cabbage (B. oleracea var.), mustard such as B. juncea, B. campestris, B. narinosa, B. nigra and B. tournefortii; and turnip (Brassica rapa var.);
- other broadleaf crops including e.g. sunflower, cotton, flax, linseed, sugarbeet, potato and tomato;
- TNV-crops (TNV: trees, nuts and vine) including e.g. grapes, citrus, pomefruit, e.g. apple and pear, coffee, pistachio and oilpalm, stonefruit, e.g. peach, almond, walnut, olive, cherry, plum and apricot;
- turf, pasture and rangeland;
- onion and garlic;
- bulb ornamentals such as tulips and narcissus;
- conifers and deciduous trees such as pinus, fir, oak, maple, dogwood, hawthorne, crabapple, and rhamnus (buckthorn); and
- garden ornamentals such as petunia, marigold, roses and snapdragon.

The method and the compositions of the present invention are in particular suitable for combating/controlling undesired vegetation in wheat, barley, rye, triticale, durum, rice, corn, sugarcane, sorghum, soybean, pulse crops such as pea, bean and lentils, peanut, sunflower, sugarbeet, potato, cotton, brassica crops, such as oilseed rape, canola, mustard, cabbage and turnip, turf, grapes, pomefruit, such as apple and pear, stonefruit, such as peach, almond, walnut, olive, cherry, plum and apricot, citrus, coffee, pistachio, garden ornamentals, such as roses, petunia, marigold, snap dragon, bulb ornamentals such as tulips and narcissus, onion, garlic, conifers and deciduous trees such as pinus, fir, oak, maple, dogwood, hawthorne, crabapple and rhamnus.

The method and the compositions of the present invention are preferably suitable for combating/controlling undesired vegetation in wheat, barley, rye, triticale, durum, rice, corn, sugarcane, sorghum, soybean, pulse crops such as pea, bean and lentils, peanut, sunflower, sugarbeet, potato, cotton, brassica crops, such as oilseed rape, canola, mustard, cabbage and turnip, turf, grapes, stonefruit, such as peach, almond, walnut, olive, cherry, plum and apricot, citrus, pistachio, onion, garlic and deciduous trees.

The method and the compositions of the present invention are also preferably suitable for combating/controlling undesired vegetation in in crops of wheat, barley, rye, rice, corn, sugarcane, sorghum, soybean, pulse crops, sunflower, potato, cotton, turf, grapes, stonefruit, citrus, pistachio, pomefruits, drybean, peas, peanut, coffee, banano, pinneaple, coconut, mango, avocado, guava, eucaliptus, pinus, blakc acacia, rubber tree, palm tree, coacoa, persimmons, pasture, nuts trees, cashnuts tree and pupunha palm.

The method and the compositions of the invention are particularly suitable for application in wheat, barley, rye, rice, corn, sugarcane, sorghum, soybean, pulse crops, sunflower, potato, cotton, turf, grapes, stonefruit, citrus and pistachio.

If not stated otherwise, the compositions of the invention are suitable for application in any variety of the aforementioned crop plants.

The compositions according to the invention can also be used in crop plants which are resistant to one or more herbicides owing to genetic engineering or breeding, which are resistant to one or more pathogens such as plant pathogenous fungi owing to genetic engineering or breeding, or which are resistant to attack by insects owing to genetic engineering or breeding.

Suitable are for example crop plants, preferably corn, wheat, sunflower, sugarcane, cotton, rice, canola, oilseed rape or soybeans, which crops are resistant to herbicidal PPO inhibitors, such as, for example, butafenacil, saflufenacil, azafenidin, carfentrazone, sulfentrazone, oxadiazon, oxadiargyl, cinidon, flumioxazin, flumiclorac, flumipropyn, acifluorfen, bifenox, chlomethoxyfen, chlornitrofen, fluoronitrofen, fomesafen, halosafen, lactofen, nitrofen, nitrofluorfen, or oxyfluorfen, or crop plants which, owing to introduction of the gene for Bt toxin by genetic modification, are resistant to attack by certain insects.

In a particular a specific embodiment, the method and the compositions of the present inventions are used for controlling undesirable vegetation to crop plants, which are tolerant to herbicides, in particular in crop plants that are resistant or tolerant to glyphosate and which are stacked with further resistance or tolerance against at least one further herbicide, in particular at least one of the following herbicides: auxins such as dicamba, ALS inhibitors, in particular imidazolinones, PPO inhibitors, preferably PPO inhibitors.

In these herbicide resistant or tolerant crops, the methods and the compositions of the present invention can be used both for burndown and for control of undesired vegetation after emergence of the crops. Therefore, a further particular embodiment of the invention relates to a method for controlling undesirable vegetation in herbicide resistant or tolerant crops, in particular in crop plants which are resistant or tolerant to glyphosate and which are optionally stacked with further resistance or tolerance against at least one further herbicide, in particular at least one of the following herbicides: auxins such as dicamba, ALS inhibitors, in particular imidazolinones, PPO inhibitors, preferably PPO inhibitors. In this particular embodiment, the compositions can be used for burndown but also for the control of undesirable vegetation after the emergence of the crop plants.

In this particular method of the invention, the method and the composition of the invention can be applied at least once prior to planting or emergence of the herbicide resistant or tolerant crop plant to achieve effective burndown of the undesirable vegetation and the compositon can also be applied after emergence of the herbicide resistant or tolerant crop plants.

If the methods and the compositions of the present invention are used in crop plants, i.e. if they are applied in fields of the crop plants after emergence of the crops, application methods and application rates as described for burndown can be applied. If the active ingredients are less well tolerated by certain crop plants, application techniques may be used in which the herbicidal compositions are sprayed, with the aid of the spray apparatus, in such a way that they come into as little contact, if any, with the leaves of the sensitive crop plants while reaching the leaves of undesirable plants which grow underneath, or the bare soil (post-directed, lay-by). However such methods are generally not necessary and the compositions can be simply applied over the top (OTT).

For example, a composition comprising glyphosate or an agriculturally acceptable salt or derivative thereof and saflufenacil, or an agriculturally acceptable derivative thereof, is particularly useful for burndown in fields, where a glyphosate tolerant crop having PPO inhibitor tolerance shall be planted such as maize, canola, wheat, soybeans or sunflower, all of which having glyphosate tolerance and PPO inhibitor tolerance. Such compositions are also particularly useful for burndown in fields where sugarcane shall be planted, the sugarcane being conventional sugarcane or sugarcane being tolerant to glyphosate optionally stacked with tolerance against PPO inhibitors. These compositions can also used for controlling undesirable vegetation in crops having glyphosate resistance stacked with PPO inhibitor tolerance after emergence of the crop.

For example, a composition comprising glyphosate or an agriculturally acceptable salt or derivative thereof and a PPO inhibitor herbicide is particularly useful for burndown in fields both of conventional crops such as maize, wheat, soybeans, sunflower and sugarcane and crops having glyphosate tolerance, optionally stacked with PPO inhibitor tolerance.

For example, a composition comprising glyphosate or an agriculturally acceptable salt or derivative thereof and a PPO inhibitor herbicide is particularly useful for burndown in fields both of conventional crops of maize and sugarcane and such crops having glyphosate tolerance, optionally stacked with further herbicide tolerance. These compositions can also used for controlling undesirable vegetation in such crops after emergence of the crop.

The method and the compositions of the present invention are particularly useful in socalled burndown programms, in particular preplant burndown programs. i.e. the compositions of the invention are applied to a locus where crops will be planted before planting or emergence of the crop.

Therefore, the present invention also relates to a method for burndown treatment of undesirable vegetation in crops, comprising applying
a) glyphosate or at least one agriculturally acceptable salt, derivative or mixtures thereof, and
b) saflufenacil or at least one agriculturally acceptable salt or mixtures thereof, to a locus where crops will be planted before planting or emergence of the crop, preferably during and/or after emergence of the undesirable plants.

In the burndown treatment of the present invention, additionally at least one further herbicide D as defined above can be applied together with glyphosate and safdlufenacil. The term "to apply together" includes simultaneous and successive application. Likewise, applying the composition does not necessarily mean that glyphosate, saflufenacil and optionally D must be applied as a single formulation or as a tank mix. Rather, the composition includes separte formulations of glyphosate and saflufenacil and optionally D, which can be applied as a single tank-mix or via separate application means. In any case, the at least glyphosate, saflufenacil and the one or more optional herbicides D can be applied simultaneously or in succession.

However, it is also possible to apply the herbicide D in the burndown treatment after seeding or even after emergence of the crop.

When the methods and the compositions according to the invention are used in burndown programms, they can be applied prior to seeding (planting) or after seeding (or planting) of the crop plants but before the emergence of the crop plants. The compositions are preferably applied prior to seeding of the crop plants. For burndown, the compositions will generally be applied a date up to 6 month, preferably up to 4 month prior to planting the crop. The burndown application can be done at a date up to 1 day prior to emergence of the crop plant and is preferably done at a date prior to seeding/planting of the crop plant, preferably at a date of at least one day, preferably at least 2 days and in particular at least 4 day prior to planting or from 6 month to 1 day prior emergence, in particular from 4 month to 2 days prior emergence and more preferably from 4 month to 4 days prior emergence. It is, of course, possible to repeat the burndown application once or more, e.g. once, twice, three times, four times or five times within that time frame.

The active ingredients used in the compositions of the present invention are usually available as pure substances and as formulations.

The formulations contain, besides the active ingredient or the composition, at least one organic or inorganic carrier material. The formulations may also contain, if desired, one or more surfactants and, if desired, one or more further auxiliaries customary for crop protection compositions.

The active ingredients (glyphosate, saflufenacil and at optionally at least one of the components C and D) can be formulated jointly or separately.

Though possible, it is not necessary to formulate glyphosate, saflufenacil and at optionally at least one of the components C and D in a single formulation. Usually glyphosate and saflufenacil and optionally at least one of the components C and D are combined as a tank-mix prior to application. It is however also possible to provide a premix of saflufenacil and optionally at least one of the components C and D and to combine this premix with glyphosate.

The formulation may be in the form of a single package formulation containing both, the glyphosate and saflufenacil and optionally the one or more herbicides D together with liquid and/or solid carrier materials, and, if desired, one or more surfactants and, if desired, one or more further auxiliaries customary for crop protection compositions. The formulation may be in the form of a two or multi (e.g. three, four or five) package formulation, wherein one package contains a formulation of saflufenacil, while the other package contains a formulation of glyphosate and optionally one or more further packages contain one or more further formulations containing at least one component C, wherein all formulations contain at least one carrier material, if desired, one or more surfactants and, if desired, one or more further auxiliaries customary for crop protection compositions.

In the case of two or multi package formulations the formulation containing saflufenacil and the formulation containing glyphosate and optionally the one or more formulations containing the one or more components C are mixed prior to application. Preferably the mixing is performed as a tank mix, i.e. the formulations are mixed immediately prior or upon dilution with water.

In the formulations the active ingredients and optional further actives are present in suspended, emulsified or dissolved form. The formulation can be in the form of aqueous solutions, powders, suspensions, also highly-concentrated aqueous, oily or other suspensions or dispersions, aqueous emulsions, aqueous microemulsions, aqueous suspo-emulsions, oil dispersions, pastes, dusts, materials for spreading or granules.

Depending on the formulation type, they comprise one or more liquid or solid carriers, if appropriate surfactants (such as dispersants, protective colloids, emulsifiers, wetting agents and tackifiers), and if appropriate further auxiliaries which are customary for formulating crop protection products. The person skilled in the art is sufficiently familiar with the recipes for such formulations. Further auxiliaries include e.g. organic and inorganic thickeners, bactericides, antifreeze agents, antifoams, colorants and, for seed formulations, adhesives.

Suitable carriers include liquid and solid carriers. Liquid carriers include e.g. non-aqeuos solvents such as cyclic and aromatic hydrocarbons, e.g. paraffins, tetrahydronaphthalene, alkylated naphthalenes and their derivatives, alkylated benzenes and their derivatives, alcohols such as methanol, ethanol, propanol, butanol and cyclohexanol, ketones such as cyclohexanone, strongly polar solvents, e.g. amines such as N-methylpyrrolidone, and water as well as mixtures thereof. Solid carriers include e.g. mineral earths such as silicas, silica gels, silicates, talc, kaolin, limestone, lime, chalk, bole, loess, clay, dolomite, diatomaceous earth, calcium sulfate, magnesium sulfate, magnesium oxide, ground synthetic materials, fertilizers such as ammonium sulfate, ammonium phosphate, ammonium nitrate, ureas, and products of vegetable origin such as cereal meal, tree bark meal, wood meal and nutshell meal, cellulose powders, or other solid carriers.

Suitable surfactants (adjuvants, wetting agents, tackifiers, dispersants and also emulsifiers) are the alkali metal salts, alkaline earth metal salts and ammonium salts of aromatic sulfonic acids, for example lignosulfonic acids (e.g. Borrespers-types, Borregaard), phenolsulfonic acids, naphthalenesulfonic acids (Morwet types, Akzo Nobel) and dibutylnaphthalenesulfonic acid (Nekal types, BASF AG), and of fatty acids, alkyl- and alkylarylsulfonates, alkyl sulfates, lauryl ether sulfates and fatty alcohol sulfates, and salts of sulfated hexa-, hepta- and octadecanols, and also of fatty alcohol glycol ethers, condensates of sulfonated naphthalene and its derivatives with formaldehyde, condensates of naphthalene or of the naphthalenesulfonic acids with phenol and formaldehyde, polyoxyethylene octylphenol ether, ethoxylated isooctyl-, octyl- or nonylphenol, alkylphenyl or tributylphenyl polyglycol ether, alkylaryl polyether alcohols, isotridecyl alcohol, fatty alcohol/ethylene oxide condensates, ethoxylated castor oil, polyoxyethylene alkyl ethers or polyoxypropylene alkyl ethers, lauryl alcohol polyglycol ether acetate, sorbitol esters, lignosulfite waste liquors and proteins, denaturated proteins, polysaccharides (e.g. methylcellulose), hydrophobically modified starches, polyvinyl alcohol (Mowiol types Clariant), polycarboxylates (BASF AG, Sokalan types), polyalkoxylates, polyvinylamine (BASF AG, Lupamine types), polyethyleneimine (BASF AG, Lupasol types), polyvinylpyrrolidone and copolymers thereof.

Examples of thickeners (i.e. compounds which impart to the formulation modified flow properties, i.e. high viscosity in the state of rest and low viscosity in motion) are polysaccharides, such as xanthan gum (Kelzan® from Kelco), Rhodopol® 23 (Rhone Poulenc) or Veegum® (from R.T. Vanderbilt), and also organic and inorganic sheet minerals, such as Attaclay® (from Engelhardt).

Examples of antifoams are silicone emulsions (such as, for example, Silikon® SRE, Wacker or Rhodorsil® from Rhodia), long-chain alcohols, fatty acids, salts of fatty acids, organofluorine compounds and mixtures thereof.

Bactericides can be added for stabilizing the aqueous herbicidal formulations. Examples of bactericides are bactericides based on diclorophen and benzyl alcohol hemiformal (Proxel® from ICI or Acticide® RS from Thor Chemie and Kathon® MK from Rohm & Haas), and also isothiazolinone derivates, such as alkylisothiazolinones and benzisothiazolinones (Acticide MBS from Thor Chemie).

Examples of antifreeze agents are ethylene glycol, propylene glycol, urea or glycerol.

Examples of colorants are both sparingly water-soluble pigments and water-soluble dyes. Examples which may be mentioned are the dyes known under the names Rhodamin B, C.I. Pigment Red 112 and C.I. Solvent Red 1, and also pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

Examples of adhesives are polyvinylpyrrolidone, polyvinyl acetate, polyvinyl alcohol and tylose.

To prepare emulsions, pastes or oil dispersions, the active ingredients (glyphosate, saflufenacil and optionally at least one of components C and D), as such or dissolved in an oil or solvent, can be homogenized in water by means of wetting agent, tackifier, dispersant or emulsifier. Alternatively, it is possible to prepare concentrates consisting of active substance, wetting agent, tackifier, dispersant or emulsifier and, if desired, solvent or oil, and these concentrates are suitable for dilution with water.

Powders, materials for spreading and dusts can be prepared by mixing or concomitant grinding of glyphosate, saflufenacil and optionally at least one of components C and D with a solid carrier.

Granules, e.g. coated granules, impregnated granules and homogeneous granules, can be prepared by binding the active ingredients to solid carriers.

The formulations of the invention comprise a rainfastness enhancing effective amount of the composition of the present invention. The concentrations of the active the active ingredients in the formulations can be varied within wide ranges. In general, the formulations comprise from 1 to 98% by weight, preferably 10 to 60 % by weight, of active ingredients (sum of glyphosate, saflufenacil and optionally further active ingredients). The active ingredients are employed in a purity of from 90% to 100%, preferably 95% to 100% (according to NMR spectrum).

The active ingredients as well as the compositions according to the invention can, for example, be formulated as follows:
1. Products for dilution with water
   A Water-soluble concentrates
      10 parts by weight of active compound (or composition) are dissolved in 90 parts by weight of water or a water-soluble solvent. As an alternative, wetters or other adjuvants are added. The active compound dissolves upon dilution with water. This gives a formulation with an active compound content of 10% by weight.
   B Dispersible concentrates
      20 parts by weight of active compound (or composition) are dissolved in 70 parts by weight of cyclohexanone with addition of 10 parts by weight of a dispersant, for example polyvinylpyrrolidone. Dilution with water gives a dispersion. The active compound content is 20% by weight.
   C Emulsifiable concentrates
      15 parts by weight of active compound (or composition) are dissolved in 75 parts by weight of an organic solvent (eg. alkylaromatics) with addition of calcium dodecylbenzenesulfonate and castor oil ethoxylate (in each case 5 parts by weight). Dilution with water gives an emulsion. The formulation has an active compound content of 15% by weight.
   D Emulsions
      25 parts by weight of active compound (or composition) are dissolved in 35 parts by weight of an organic solvent (eg. alkylaromatics) with addition of calcium dodecylbenzenesulfonate and castor oil ethoxylate (in each case 5 parts by weight). This mixture is introduced into 30 parts by weight of water by means of an emulsifier (Ultraturrax) and made into a homogeneous emulsion. Dilution with water gives an emulsion. The formulation has an active compound content of 25% by weight.
   E Suspensions
      In an agitated ball mill, 20 parts by weight of active compound (or composition) are comminuted with addition of 10 parts by weight of dispersants and wetters and 70 parts by weight of water or an organic solvent to give a fine active compound suspension. Dilution with water gives a stable suspension of the active compound. The active compound content in the formulation is 20% by weight.
   F Water-dispersible granules and water-soluble granules
      50 parts by weight of active compound (or composition) are ground finely with addition of 50 parts by weight of dispersants and wetters and made into water-dispersible or water-soluble granules by means of technical appliances (for example extrusion, spray tower, fluidized bed). Dilution with water gives a stable dispersion or solution of the active compound. The formulation has an active compound content of 50% by weight.
   G Water-dispersible powders and water-soluble powders
      75 parts by weight of active compound (or composition) are ground in a rotor-stator mill with addition of 25 parts by weight of dispersants, wetters and silica gel. Dilution with water gives a stable dispersion or solution of the active compound. The active compound content of the formulation is 75% by weight.
   H Gel formulations
      In a ball mill, 20 parts by weight of active compound (or composition), 10 parts by weight of dispersant, 1 part by weight of gelling agent and 70 parts by weight of water or of an organic solvent are mixed to give a fine suspension. Dilution with water gives a stable suspension with active compound content of 20% by weight.
2. Products to be applied undiluted
   I Dusts
      5 parts by weight of active compound (or composition) are ground finely and mixed intimately with 95 parts by weight of finely divided kaolin. This gives a dusting powder with an active compound content of 5% by weight.
   J Granules (GR, FG, GG, MG)
      0.5 parts by weight of active compound (or composition) are ground finely and associated with 99.5 parts by weight of carriers. Current methods here are extrusion, spray-drying or the fluidized bed. This gives granules to be applied undiluted with an active compound content of 0.5% by weight.
   K ULV solutions (UL)
      10 parts by weight of active compound (or composition) are dissolved in 90 parts by weight of an organic solvent, for example xylene. This gives a product to be applied undiluted with an active compound content of 10% by weight.

Aqueous use forms can be prepared from emulsion concentrates, suspensions, pastes, wettable powders or water-dispersible granules by adding water.

It may furthermore be beneficial to apply the compositions of the invention alone or in combination with other herbicides, or else in the form of a mixture with other crop protection agents, for example together with agents for controlling pests or phytopatho-genic fungi or bacteria. Also of interest is the miscibility with mineral salt solutions, which are employed for treating nutritional and trace element deficiencies. Other additives such as non-phytotoxic oils and oil concentrates may also be added

With regard to the method and the compositions according to the present invention, the definitions of the aforementioned preferred embodiments of the present invention have to be understood as being preferred either alone or in combination with each other.

The following examples are presented to further illustrate the method of this invention, but are not be construed as limiting the invention.

The enhancement of the rainfastness of glyphosate was determined via the herbicidal activity of the mixture comprising glyphosate and saflufenacil as well as of the single herbicidal components in relation to simulated rainfall at different time intervals.

The evaluation of the damage caused by the method and the compositions the according to the present invention and the single herbicidal components was carried out using a scale from 0 to 100 %, compared to the untreated control plots. Here, 0 means no damage and 100 means complete destruction of the plants of a respective weed or crop species.

The application was performed with a fixed spayer system with air pressurization and with a tank spray volume of two liters. The speed of the spray device over the plants was adjusted for a spray volume of 200 l /ha. The spray device was a spray barr with four nozzles from the type Teejet XR 11002VS with a space of 50 cm between each nozzle.

The application was performed at a weed stage of 6 to 8 leaves. After the application of the formulated herbicides the leaves were washed through rain of 20 mm using a fixed rain simulator system at following time interval: 15 min, 30 min, 1, 2, 3, 4 and 6 hours after treatment.

### Formulations of the active ingredients:

| | |
|---|---|
| "Saflufenacil A": | saflufenacil has been formulated as wettable granule (WG) compris- ing 700 g of active ingredient per kg WG |
| "Glyph A": | Roundup Original comprising 360 g of acidic equivalent per liter soluble concentrate (SL) |
| "Glyph B": | Roundup Transorb comprising 480 g of acidic equivalent per liter SL |
| "Glyph C": | Roundup WG comprising 720 g of acidic equivalent per kg |
| | |
| Application rates: | Saflufenacil A: 24,5 g/ha |
| | Glyph A: 1080 g/ha |
| | Glyph B: 1080 g/ha |
| | Glyph C: 1080 g/ha |

Saflufenacil A as well as each mixture of Glyph A, Glyph B and Glyph C have been formulated with 0.5% v/v Dash.

### Example 1:

Rainfall 15 min after treatment - herbicidal action against Cassia obtusifolia

| Treatment | days after treatment (DAA) | | | | | | | | | |
|---|---|---|---|---|---|---|---|---|---|---|
| | 1 | 2 | 3 | 4 | 7 | 14 | 21 | 28 | 35 | 42 |
| Saflufenacil A | 36 | 41 | 34 | 29 | 16 | 2 | 0 | 0 | 0 | 0 |
| Glyph A | 0 | 2 | 2 | 3 | 3 | 2 | 0 | 0 | 0 | 0 |
| Glyph B | 0 | 1 | 1 | 3 | 5 | 0 | 0 | 0 | 0 | 0 |
| Glyph C | 0 | 1 | 2 | 5 | 8 | 1 | 0 | 0 | 0 | 0 |
| Saflufenacil A + Glyph A | 26 | 40 | 35 | 39 | 43 | 41 | 38 | 28 | 11 | 3 |
| Saflufenacil A + Glyph B | 31 | 44 | 54 | 69 | 69 | 68 | 67 | 63 | 49 | 30 |
| Saflufenacil A + Glyph C | 31 | 34 | 56 | 56 | 58 | 61 | 59 | 26 | 8 | 4 |

### Example 2:

Rainfall 30 min after treatment - herbicidal action against Cassia obtusifolia

| Treatment | days after treatment (DAA) | | | | | | | | | |
|---|---|---|---|---|---|---|---|---|---|---|
| | 1 | 2 | 3 | 4 | 7 | 14 | 21 | 28 | 35 | 42 |
| Saflufenacil A | 50 | 65 | 69 | 60 | 33 | 1 | 0 | 0 | 0 | 0 |
| Glyph A | 0 | 1 | 2 | 5 | 8 | 4 | 2 | 1 | 1 | 1 |
| Glyph B | 0 | 2 | 1 | 3 | 11 | 3 | 2 | 0 | 0 | 0 |
| Glyph C | 0 | 1 | 1 | 5 | 7 | 4 | 1 | 1 | 0 | 0 |
| Saflufenacil A + Glyph A | 41 | 84 | 83 | 86 | 86 | 86 | 88 | 88 | 91 | 88 |
| Saflufenacil A + Glyph B | 54 | 76 | 84 | 88 | 90 | 90 | 93 | 92 | 95 | 97 |
| Saflufenacil A + Glyph C | 40 | 74 | 74 | 79 | 84 | 86 | 88 | 88 | 94 | 95 |

### Example 3:

Rainfall 1 hour after treatment - herbicidal action against Cassia obtusifolia

| Treatment | days after treatment (DAA) | | | | | | | | | |
|---|---|---|---|---|---|---|---|---|---|---|
| | 1 | 2 | 3 | 4 | 7 | 14 | 21 | 28 | 35 | 42 |
| Saflufenacil A | 53 | 73 | 74 | 79 | 53 | 2 | 0 | 0 | 0 | 0 |
| Glyph A | 0 | 1 | 2 | 6 | 7 | 4 | 3 | 2 | 5 | 5 |
| Glyph B | 0 | 1 | 1 | 4 | 10 | 9 | 7 | 4 | 7 | 4 |
| Glyph C | 0 | 1 | 1 | 6 | 10 | 7 | 9 | 3 | 4 | 5 |
| Saflufenacil A + Glyph A | 60 | 78 | 80 | 89 | 95 | 91 | 94 | 93 | 95 | 95 |
| Saflufenacil A + Glyph B | 61 | 75 | 77 | 81 | 88 | 89 | 94 | 91 | 95 | 97 |
| Saflufenacil A + Glyph C | 54 | 79 | 82 | 86 | 91 | 90 | 91 | 93 | 96 | 95 |

### Example 4:

Rainfall 2 hours after treatment - herbicidal action against Cassia obtusifolia

| Treatment | days after treatment (DAA) | | | | | | | | | |
|---|---|---|---|---|---|---|---|---|---|---|
| | 1 | 2 | 3 | 4 | 7 | 14 | 21 | 28 | 35 | 42 |
| Saflufenacil A | 71 | 86 | 82 | 83 | 24 | 1 | 0 | 0 | 0 | 0 |
| Glyph A | 0 | 1 | 3 | 8 | 13 | 26 | 24 | 25 | 29 | 31 |
| Glyph B | 0 | 1 | 2 | 4 | 14 | 7 | 19 | 21 | 41 | 50 |
| Glyph C | 0 | 1 | 1 | 7 | 12 | 30 | 33 | 34 | 38 | 59 |
| Saflufenacil A + Glyph A | 70 | 87 | 88 | 91 | 92 | 94 | 96 | 98 | 98 | 99 |
| Saflufenacil A + Glyph B | 45 | 81 | 79 | 82 | 89 | 90 | 94 | 94 | 96 | 95 |
| Saflufenacil A + Glyph C | 46 | 76 | 79 | 84 | 89 | 89 | 91 | 92 | 97 | 96 |

### Example 5:

Rainfall 4 hours after treatment - herbicidal action against Cassia obtusifolia

| Treatment | days after treatment (DAA) | | | | | | | | | |
|---|---|---|---|---|---|---|---|---|---|---|
| | 1 | 2 | 3 | 4 | 7 | 14 | 21 | 28 | 35 | 42 |
| Saflufenacil A | 61 | 81 | 79 | 88 | 22 | 2 | 0 | 0 | 0 | 0 |
| Glyph A | 0 | 1 | 5 | 12 | 21 | 29 | 31 | 36 | 48 | 43 |
| Glyph B | 0 | 2 | 7 | 13 | 33 | 26 | 28 | 46 | 87 | 87 |
| Glyph C | 0 | 2 | 3 | 6 | 10 | 9 | 6 | 4 | 7 | 8 |
| Saflufenacil A + Glyph A | 66 | 84 | 88 | 90 | 95 | 92 | 98 | 100 | 100 | 100 |
| Saflufenacil A + Glyph B | 67 | 84 | 86 | 93 | 95 | 95 | 98 | 99 | 99 | 99 |
| Saflufenacil A+ Glyph C | 68 | 84 | 88 | 80 | 94 | 95 | 97 | 98 | 99 | 98 |

### Example 6:

Rainfall 6 hours after treatment - herbicidal action against Cassia obtusifolia

| Treatment | days after treatment (DAA) | | | | | | | | | |
|---|---|---|---|---|---|---|---|---|---|---|
| | 1 | 2 | 3 | 4 | 7 | 14 | 21 | 28 | 35 | 42 |
| Saflufenacil A | 64 | 84 | 88 | 83 | 56 | 2 | 0 | 0 | 0 | 0 |
| Glyph A | 0 | 1 | 8 | 14 | 19 | 14 | 22 | 29 | 43 | 48 |
| Glyph B | 0 | 2 | 8 | 13 | 20 | 21 | 35 | 78 | 89 | 94 |
| Glyph C | 0 | 1 | 5 | 12 | 25 | 29 | 25 | 26 | 48 | 48 |
| Saflufenacil A + Glyph A | 64 | 86 | 87 | 90 | 90 | 88 | 96 | 97 | 98 | 100 |
| Saflufenacil A + Glyph B | 70 | 90 | 89 | 93 | 98 | 95 | 99 | 99 | 100 | 100 |
| Saflufenacil A + Glyph C | 68 | 88 | 90 | 92 | 97 | 96 | 98 | 99 | 100 | 100 |

The results clearly prove that application of a composition comprising glyphosate and saflufenacil effectively enhances the rainfastness of glyphosate.

## Claims

1. A method to enhance the rainfastness of glyphosate by applying a composition comprising
a) glyphosate or at least one agriculturally acceptable salt, derivative or mixtures thereof, and
b) saflufenacil or at least one agriculturally acceptable derivative or mixtures thereof, to unwanted vegetation, crops, crop seed or other crop propagating organ.

2. The method according to claim 1 wherein the composition is applied in crops of wheat, barley, rye, rice, corn, sugarcane, sorghum, soybean, pulse crops, sunflower, potato, cotton, turf, grapes, stonefruit, citrus, pistachio, pomefruits, drybean, peas, peanut, coffee, banano, pinneaple, coconut, mango, avocado, guava, eucaliptus, pinus, blakc acacia, rubber tree, palm tree, coacoa, persimmons, pasture, nuts trees, cashnuts tree and pupunha palm.

3. The method according to claims 1 or 2 wherein the composition is applied to a locus where crops will be planted, before planting or before emergence of the crop, for burndown treatment of undesirable vegetation in crops.

4. A herbicidal composition comprising glyphosate or at least one agriculturally acceptable salt, derivative or mixtures thereof, and saflufenacil or at least one agriculturally acceptable salt or mixtures thereof, in a ratio of 1:50 to 50:1.
